# EUROPEAN PATENT APPLICATION

(11) **EP 3 342 716 A1**
(43) Date of publication of application: **04.07.2018**
(21) Application number: 16382666.2
(22) Date of filing: 28.12.2016
(51) Int. Cl.: B64D 39/04

(54) **AIRCRAFT REFUELING BOOM SYSTEM WITH NOZZLE SECURITY MEANS**

(71) Applicant: Airbus Defence and Space SA, 28906 Getafe Madrid (ES)
(72) Inventor: ZOMEÑO RODRÍGUEZ, Ramón, 28906 Getafe (ES)
(74) Representative: Elzaburu S.L.P.

(57) **Abstract**

The invention provides an Air Refueling Boom System comprising a boom (21) joined to the tanker aircraft (11) by means of a mechanical articulation (23) with an inner fuel conduit and a nozzle (31) at its distal end. The tip module (41) of the boom (21) includes a breakable section (43) for separating it in a first and a second portion (45, 47) for allowing a safe separation of tanker and receiver aircraft (11, 13) in a failure event of a refueling operation and linking means (51; 61, 61') of its first and second portions (45, 47) for allowing their separation in case of overloads on the nozzle (31) when it is latched to the receptacle (19) and for allowing their separation in case of overloads on the nozzle (31) when it is latched to the receptacle (19).

## Description

### FIELD OF THE INVENTION

The present invention relates generally to Aircraft Refueling Boom Systems and, more specifically, to Aircraft Refueling Boom Systems with security means for avoiding damages to the receiver aircraft.

### BACKGROUND

An aircraft refueling boom is a beam fuel-tight unit attached by its forward end to a tanker aircraft having aerodynamic lift surfaces called ruddevators used to aerodynamically control the position of the boom in elevation and azimuth that provides a fuel passage from the tanker to the boom nozzle.

The outer end portion of the boom is a telescoping section for inward and outward movement.

The receiver aircraft is equipped with a refueling receptacle which engages with the boom nozzle in an in-flight refueling operation.

The boom is guided by an operator or a system located in the tanker aircraft so as to line the boom nozzle with the receiver aircraft receptacle. When the boom nozzle is aligned with the receiver receptacle the telescoping portion is extended, so that the nozzle engages the receptacle to complete the coupling which must be accomplished and maintained within a predetermined refueling envelope to avoid a disconnection.

During tanker to receiver contacts, mechanical contact loads are built up and stresses are placed on the boom as well as on the receiver. These stresses can result in boom or receptacle failure.

EP 1 894 840 A1 describes a refueling apparatus for interconnecting a tanker aircraft with a receiver aircraft in flight comprising a boom, joined to said tanker aircraft by means of a mechanical articulation, with an inner fuel conduit and a refueling nozzle at its distal end, having control means including a central computer station, being its tip region arranged by the assembly of a first module having load sensing means, a second module having load alleviation means and a third module, joined to the nozzle, having a mechanical fuse for allowing the safe separation of tanker and receiver aircraft in the event of overloads.

EP 2 343 240 A2 describes a system for disconnecting the nozzle of a boom from a receptacle to which the nozzle is connected for fuel transfer, comprising latches which are situated in the nozzle and engage with latch-pins arranged in the said receptacle. The system comprises a receptacle disconnection sub-system which operates the latch-pins of the receptacle and a nozzle disconnection sub-system which operates the latches of the nozzle such that, when an operator performs a normal disconnection of the nozzle, the system sends a first signal to the receptacle so that its latch-pins are retracted in order to release the latches of the nozzle and, in parallel, sends a second signal to the nozzle so that the latches of the nozzle are retracted and release the said nozzle.

After a refueling operation, during the disconnection phase, it may happen that the end of the boom is not connected to the receiver aircraft but is still very close to the receiver aircraft receptacle or even still inside the receptacle. In that situation there is a big risk of contact between boom end and receptacle or of jamming of the nozzle inside the receptacle. In some cases these events may lead to a separation of the nozzle from the boom.

A free nozzle flying freely towards the receiver aircraft can damage it causing a catastrophic event.

A free nozzle descending from a very high altitude can also cause important damages when hits the ground.

The present invention is intended to solve said problems.

### SUMMARY OF THE INVENTION

The invention refers to an Air Refueling Boom System for supplying fuel from a tanker aircraft to a receiver aircraft in flight comprising a boom joined to the tanker aircraft by means of a mechanical articulation with an inner fuel conduit and a nozzle at its distal end. The receiver aircraft has a receptacle to cooperate with the nozzle in a refueling operation that takes place when the nozzle is latched to the receptacle. The boom comprises a tip module that includes a breakable section (such as a mechanical fuse) for separating it in a first portion and a second portion for allowing a safe separation of tanker and receiver aircraft in a failure event of a refueling operation, being the nozzle latched to the receptacle.

The invention provides an Air Refueling Boom System that additionally comprises linking means of the first and second portions of the tip module with a double functionality:
- Breaking at the same time that the breakable section in an overloads event when the nozzle is latched to the receptacle.
- Keeping linked the first and second portions of the tip module when the nozzle is not latched to the receptacle and an overload occurs.

Moreover, the linking means of the Air Refueling Boom System are adapted for allowing relative movements between the first and second portions of the tip module when the nozzle is not latched to the receptacle.

Moreover, the linking means of the Air Refueling Boom System are attached to at least one elastic element of the second portion of the tip module so that both portions may be held together. The elastic element or elements can be located inside or outside the fuel conduit.

Moreover, the Air Refueling Boom System comprises whether a wire rope or an ensemble of wire ropes attached to the first and second portions of the tip module as linking means.

In another aspect the invention provides a tanker aircraft comprising said Air Refueling Boom System.

Other desirable features and advantages of the invention will become apparent from the subsequent detailed description of the invention and the appended claims, in relation with the enclosed drawings.

### BRIEF DESCRIPTION OF DRAWINGS

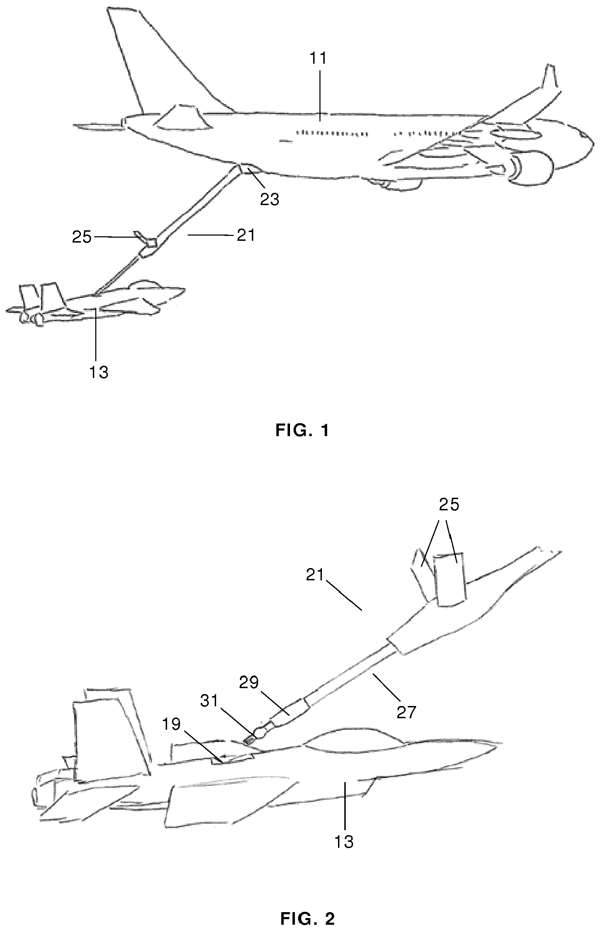

Figure 1 is a schematic a side view of a refueling operation between a tanker aircraft and a receiver aircraft using an Aircraft Refueling Boom System.
Figure 2 is a schematic partial view of an Aircraft Refueling Boom System before engaging its nozzle in the receptacle of the receiver aircraft.
Figure 3 is a schematic side view of the engagement of the nozzle in the receptacle of the receiver aircraft.
Figures 4a and 4b are schematic side views of the nozzle joined to a tip module of the boom in two possible states in an embodiment of the invention.
Figures 5a and 5b are schematic side views of the nozzle joined to a tip module of the boom in two possible states according to another embodiment of the invention.

### DETAILED DESCRIPTION OF THE INVENTION

The Aircraft Refueling Boom System of the invention comprises a boom 21 which is a telescoping beam fuel-tight unit attached by its forward end to the underside fuselage of a tanker aircraft 11 by means of a mechanical articulation 23. Integrally attached to the boom 21 are aerodynamic lift surfaces 25 called ruddevators which are used to aerodynamically control the position of the boom 21 in elevation and azimuth.

The outer end portion of boom 21 is a telescoping section 27 for inward and outward movement. A boom tip assembly 29 and a nozzle 31 are located on the distal end of the telescoping section 27. The receiver aircraft 13 is equipped with an aerial refueling receptacle 19 which engages with the nozzle 31 for the refueling operation.

A boom operator or an automatic system, not shown, located in the tanker aircraft 11 guides the boom 21 so as to line the nozzle 31 with the receptacle 19 of the receiver aircraft 13. When the boom nozzle 31 is dynamically aligned with the receiver receptacle the boom operator extends the telescoping section 27, so that the nozzle 31 engages the receptacle 19 to complete the coupling which must be accomplished and maintained within a predetermined refueling envelope to avoid a disconnection.

The nozzle 31 and the receptacle 19 of the receiver aircraft 13 are equipped with, respectively, latching means 32, 20 to control their engagement and disengagement.

Loads during engagement and contact are transferred from the nozzle 31 to the boom 21 through the boom tip assembly 29 which attenuates, alleviates and limits such loads while maintaining a fuel tight passage through the boom 21 to the nozzle 31.

In the Aircraft Refueling Boom System of the invention, the tip module 41 of the boom tip assembly 29, which is joined to the nozzle 31, comprises a breakable section 43 for dividing the tip module 41 in a first portion 45 joined to the nozzle 31, a second portion 47 and also linking means between both portions 45, 47.

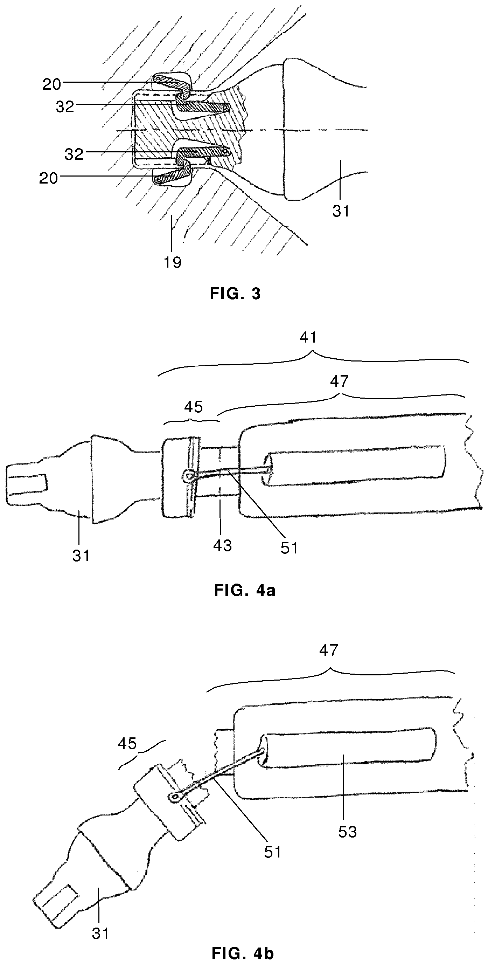

In the embodiment illustrated in Figures 4a, 4b the linking means 51 are attached to an elastic element 53, such as a spring, located inside the fuel conduit of the second portion 47.

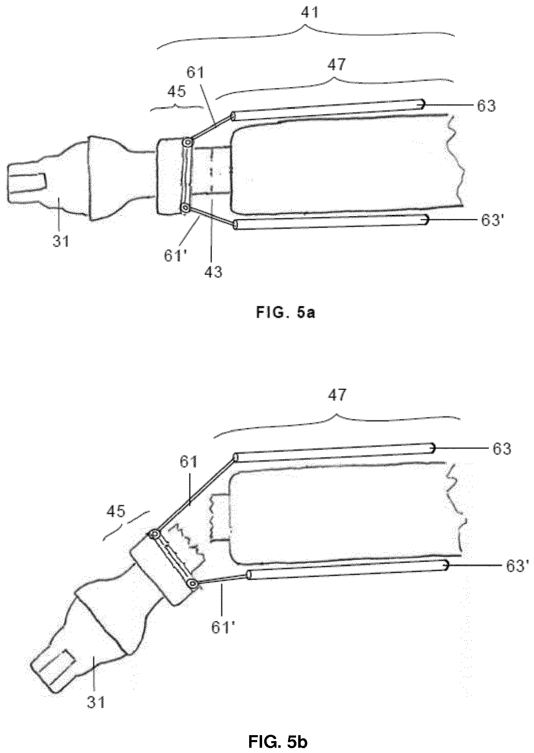

In the embodiment illustrated in Figures 5a, 5b the linking means 61, 61' are attached to, respectively, two elastic elements 63, 63', such as springs, placed inside two cylinders located outside the fuel conduit of the second portion 47.

The elastic elements 53; 63, 63' provide to the linking means 51; 61, 61' with extension and retraction functionalities to keep the first and second portions 45, 47 in a separated or in a joined relative position depending on the circumstances of the disconnection procedure.

The breakable section 43 is intended for keeping attached the ensemble of the nozzle 31 and the first portion 45 of the tip module 41 to the receptacle 19 of the receiver aircraft 13 in overloads events during the disconnection phase of a refueling operation, being the nozzle 31 latched to the receptacle 19. The breakable section 43 may be configured as a mechanical fuse that breaks when the loads on it reach a determined value.

The linking means 51; 61, 61' are intended as means for keeping attached the nozzle 31 to the boom tip assembly 29 in overloads events during the disconnection phase of a refueling operation when the nozzle 31 is not latched to the receptacle 19, thus preventing a separation of the end of the boom 21 from the rest of it, after being disengaged the nozzle 31 from the receptacle 19, due to, for example, a contact of the nozzle 31 with the receptacle 19 (they are very close during the disconnection phase) that activates a breakage of the tip module 41 leaving the ensemble of the nozzle 31 and the first portion 45 of the tip module 41 of the boom tip assembly 29 as a free body that may impact the receiver aircraft or the ground producing catastrophic damages.

The linking means 51; 61, 61' are also intended as complementary means for keeping attached the nozzle 31 to the receptacle 19 of the receiver aircraft 13 in overloads events during the disconnection phase of a refueling operation, being the nozzle 31 latched to the receptacle 19. The linking means 51; 61, 61' shall thus be configured to break at the same load than the breakable section 43.

The linking means 51; 61, 61' give therefore the Aircraft Refueling Boom System an additional degree of freedom that allows a disconnection operation without the risk of losing the boom end.

In one embodiment the linking means 51; 61, 61' are whether a wire rope or an ensemble of wire ropes joining the first and second portions 45, 47 of the tip module 41 in a manner that allows relative movement between them.

Although the present invention has been described in connection with various embodiments, it will be appreciated from the specification that various combinations of elements, variations or improvements therein may be made, and are within the scope of the invention as defined by the appended claims.

## Claims

1. An Air Refueling Boom System for supplying fuel from a tanker aircraft (11) to a receiver aircraft (13) in flight comprising a boom (21) joined to the tanker aircraft (11) by means of a mechanical articulation (23) with an inner fuel conduit and a nozzle (31) at its distal end;
the receiver aircraft (13) having a receptacle (19) to cooperate with the nozzle (31) in a refueling operation;
the nozzle (31) and the receptacle (19) of the receiver aircraft (13) having cooperating latching means (32, 20);
the boom (21) having a tip module (41) joined to the nozzle (31) that includes a breakable section (43) for separating it in a first portion (45) and a second portion (47) for allowing a safe separation of tanker and receiver aircraft (11, 13) in a failure event of a refueling operation, being the nozzle (31) latched to the receptacle (19);
**characterized in that** the tip module (41) further comprises linking means of its first and second portions (45, 47) configured for maintaining both portions (45, 47) mechanically linked in case of overloads on the nozzle (31) when it is not latched to the receptacle (19) and for allowing the separation of both portions in case of overloads on the nozzle (31) when it is latched to the receptacle (19).

2. An Air Refueling Boom System according to claim 1, wherein the breakable section (43) is a mechanical fuse.

3. An Air Refueling Boom System according to any of claims 1-2, wherein the linking means are adapted for allowing relative movements between the first and second portions (45, 47) of the tip module (41) when the nozzle (31) is not latched to the receptacle (19).

4. An Air Refueling Boom System according to any of claims 1-3 wherein, the linking means are attached to at least an elastic element located on the second portion (47) of the tip module (41) so that both portions (45, 47) may be held together.

5. An Air Refueling Boom System according to claim 4, wherein the linking means (51) are attached to an elastic element (53) located inside the fuel conduit of the second portion (47) of the tip module (41).

6. An Air Refueling Boom System according to claim 4, wherein the linking means are attached to at least an elastic element located outside the fuel conduit of the second portion (47) of the tip module (41).

7. An Air Refueling Boom System according to claim 6, wherein the linking means (61, 61') are attached to two elastic elements (63, 63').

8. An Air Refueling Boom System according to any of claims 5-7, wherein the linking means (51; 61, 61') are a wire rope.

9. An Air Refueling Boom System according to any of claims 5-7, wherein the linking means (51; 61, 61') are an ensemble of wire ropes.

10. A tanker aircraft (11) comprising an Air Refueling Boom System according to any of claims 1-9.
